# EUROPEAN PATENT SPECIFICATION

(11) **EP 0 841 981 B1**
(45) Date of publication and mention of the grant of the patent: **09.04.2003**
(21) Application number: 96920520.2
(22) Date of filing: 28.05.1996
(51) Int. Cl.: B01D 53/94

(54) **DIESEL ENGINE EXHAUST GAS CATALYST AND METHOD OF USE**
DIESELMOTORABGASKATALYSATOR UND VERWENDUNGSMETHODE
CATALYSEUR POUR GAZ D'ECHAPPEMENT DE MOTEUR DIESEL ET PROCEDE D'EMPLOI

(30) Priority: 15.06.1995 US 490892
(43) Date of publication of application: 20.05.1998
(73) Proprietor: ENGELHARD CORPORATION, Iselin, New Jersey 08830-0770 (US)
(72) Inventor: DETTLING, Joseph, C., Howell, NJ 07731 (US); LUI, Yiu, Kwan, Parlin, NJ 08859 (US)
(74) Representative: Fisher, Adrian John
(86) International application number: US9607785
(87) International publication number: WO97000119

(56) References cited:
- EP-A- 0 559 021
- WO-A-94/22564
- US-A- 4 714 694
- US-A- 4 760 044
- US-A- 5 157 007
- US-A- 5 407 880

## Description

### BACKGROUND OF THE INVENTION

### Field of the Invention

The present invention relates to a catalyst composition and method of using the same for the oxidation of oxidizable components of exhaust gases, and more specifically to the treatment of diesel exhaust to reduce the content of particulates and other pollutants discharged to the atmosphere.

### Description of Related Art

Diesel engine exhaust is a heterogeneous material which contains not only gaseous pollutants such as carbon monoxide ("CO") and unburned hydrocarbons ("HC"), but also soot particles which comprise both a dry, solid carbonaceous fraction and a soluble organic fraction. The soluble organic fraction is sometimes referred to as a volatile organic fraction ("VOF"), which terminology will be used herein. The VOF may exist in diesel exhaust either as a vapor or as an aerosol (fine droplets of liquid condensate) depending on the temperature of the diesel exhaust.

Oxidation catalysts comprising a platinum group metal dispersed on a refractory metal oxide support are known for use in treating the exhaust of diesel engines in order to convert both HC and CO gaseous pollutants and particulates, i.e., soot particles, by catalyzing the oxidation of these pollutants to carbon dioxide and water. One problem faced in the treatment of diesel engine exhaust is presented by the presence of sulfur in diesel fuel. Upon combustion, sulfur forms sulfur dioxide and the oxidation catalyst catalyzes the SO₂ to ₃ SO ("sulfates") with subsequent formation of condensable sulfur compounds, such as sulfuric acid, which condense upon, and thereby add to, the mass of particulates. The sulfates also react with activated alumina supports to form aluminum sulfates, which render activated alumina-containing catalysts inactive as disclosed in U.S. Patent 4,171,289. Previous attempts to deal with the sulfation problem include the incorporation of large amounts of sulfate-resistant materials such as vanadium oxide into the support coating, or the use of sulfur-resistant support materials such as α-alumina (alpha), silica and titania.

The prior art also shows an awareness of the use of zeolites, including metal-doped zeolites (i.e. catalytically active), to treat diesel exhaust. For example, U.S. Patent 4,929,581 discloses a filter for diesel exhaust, in which the exhaust is constrained to flow through the catalyst walls to filter the soot particles. A catalyst comprising a platinum group metal-doped zeolite is dispersed on the walls of the filter to catalyze oxidation of the soot to unplug the filter.

EPO 92/102161.4 discloses a catalyst for reducing the particle content and/or size in diesel engine exhaust by way of the zeolitic catalyst having acidic properties. The catalyst is stated to have properties enabling it to crack long-chain aromatic hydrocarbons. Zeolites include faujasite, pentasil and mordenite. Additionally, the faujasite and mordenite can be de-aluminated. The zeolite is stated to contain one or several transition elements which can include copper, nickel, cobalt, iron, chromium, manganese and/or vanadium.

Japanese Application No. S63-95026 (Publication No. H1-266854, October 24, 1989) discloses a catalyst for cleansing exhaust gas. The catalyst consists of zeolite, ion-exchanged with copper and carried on a fireproof carrier. The ion-exchange site is on the surface of the zeolite supercage and the coordination site of the oxygen atom for copper ion is a four-coordinate square.

Iwamoto, Catalytic Decomposition of Nitrogen Oxides, Petrotech 12, 888-893, 1989 is directed to the reduction of nitrogen oxides and various emissions from diesel exhaust. It is taught to use copper ion-exchanged ZSM-5 or mordanite or ferrierite. U.S. Patent No. 4,934,142 discloses an exhaust emission control device comprising a first filter provided in an exhaust system of an engine to collect particulates contained in an exhaust gas. A second filter is provided downstream of the first filter to absorb an offensive odor component. The second filter is formed by an ion-exchange of copper ions of copper carried on a zeolite.

EPO Application No. 0 508 513 A1 discloses a method for treating diesel fuel engine exhaust to reduce emission of particulates having cores of carbonaceous material and condensable hydrocarbons deposited on the carbonaceous material. The condensable hydrocarbons in the exhaust are contacted with a catalytically active solid acid material having hydrogen ions releasably retained at acidic sites thereof. The condensable hydrocarbons in contact with the sites are cracked as hydrogen ions are released from the sites. The solid acid material is desirably a Y-type zeolite with (H) cations (HY zeolite), or hydrolyzed multi-valent cations such as lanthanum (LaY zeolite), cerium (CeY zeolite) and calcium (CaY zeolite) and is supported on a ceramic or metal monolith.

U.S. Application No. 08/255,289 entitled, "Improved Zeolite-Containing Oxidation Catalyst and Method of Use" discloses a catalyst composition for treating a diesel engine exhaust stream containing a volatile organic fraction. The catalyst composition comprises a refractory carrier on which is disposed a coating of a catalytic material comprising a catalytically effective amount of ceria having a BET surface area of at least about 10 m²/g and a catalytically effective amount of zeolite. It is also known to employ an alumina stabilized ceria as a support for a platinum group metal as a dual exhaust catalyst.

The use of finely divided inorganic oxides containing vanadium and platinum group metal as active components is disclosed in US Patent No. 5,157,007. The catalyst is in the form of an open cell, monolith.

WO 94/22564 discloses a catalyst composition for treating diesel exhaust which includes ceria and optionally alumina as well as a beta zeolite. A platinum group metal is employed to promote oxidation of CO and HC while limiting the conversion of SO₂ to SO₃.

US-A-5 354 720 (corresponding to EP-A-0 559 021) discloses a catalyst for reducing the quantity of nitrogen oxides in lean exhaust gas of motor vehicle engines, comprising: an inner structure - reinforcing body; a first catalytic coating on the body, which coating includes aluminium oxide and/or cerium oxide of large surface area, optionally stabilised with rare earth metals and/or silicon dioxide as a carrier for catalytically active noble metal components; and a second catalytic coating of zeolite on the first catalytic coating; wherein the noble metal components of the first catalytic layer include iridium and platinum in a ratio by weight of 1:10 to 10:1, and wherein the zeolite is a temperature - stable zeolite of the mordenite type containing copper and/or iron.

As is well-known in the art, catalysts used to treat the exhaust of internal combustion engines are less effective during periods of relatively low temperature operation, such as the initial cold-start period of engine operation. This is because the engine exhaust is not at a temperature sufficiently high for the efficient catalytic conversion of noxious components in the exhaust. To this end, it is known in the art to employ high loads of the platinum group metal catalyst to increase catalytic activity at low temperatures. It is also known to include an adsorbent material, which may be a zeolite, as part of a catalytic treatment system in order to adsorb gaseous pollutants, usually hydrocarbons, and retain them during the initial cold-start period until the exhaust reaches a more suitable, higher temperature. As the exhaust gas temperature increases, the adsorbed hydrocarbons are driven from the adsorbent and subjected to catalytic treatment at the higher temperature as disclosed, for example, in U.S. Patent 5,125,231 in which platinum group metal-doped zeolites are employed as low temperature hydrocarbon adsorbents and oxidation catalysts.

Such efforts to improve upon the performance of diesel exhaust catalysts have been problematical. This is because, the low and high temperature operating conditions, the presence of SO₂ and the need to effectively convert CO and HC to innocuous materials often impose competing requirements on diesel exhaust catalysts. For example, it is known that high loading of platinum group metals is required to convert CO and HC at low temperatures. However, high loading of the platinum group metal increases the rate of conversion of SO₂ to SO₃.

It is also known to modify the activity of the platinum group metals by adding appreciable amounts of vanadium oxide to the catalyst composition. Vanadium oxide reduces the activity of the platinum metal to thereby reduce the rate at which SO₂ is converted to SO₃. However, after a relatively short operating period, vanadium oxide begins to irreversibly deactivate the platinum group metal thereby decreasing the performance of the catalyst in the conversion of CO and HC.

It would therefore be a significant advance in the art of converting diesel exhaust to innocuous materials to provide a catalyst which effectively converts CO and HC including the volatile organic fraction, while minimizing the conversion of SO₂ to SO₃.

### Summary of the Invention

The present invention is generally directed to a catalyst composition, structures containing the same and methods for oxidizing oxidizable components of a diesel engine exhaust stream in which at least some of a volatile organic fraction of the diesel exhaust is converted to innocuous materials and in which gaseous hydrocarbons (HC) and carbon monoxide (CO) pollutants may also be similarly converted. The operation of the catalyst composition and the conversion reactions take place without the substantial conversion of sulfur dioxide (SO₂) to sulfur trioxide (SO₃).

The catalyst composition for treating a diesel engine exhaust stream specifically in accordance with the present invention comprises:
a) a catalytically effective amount of at least one platinum group metal on a support in the presence of at least one catalytic activity controlling compound;
b) a thermally stable ceria; and
c) a non-catalytic pore-containing zeolite.

In one aspect of the invention, the catalyst composition contains at least one compound which effectively controls the catalytic activity of the platinum group metal. The catalyst can therefore be employed in high loading amounts suitable for low temperature operation while minimizing the conversion of SO₂ to SO₃. Preferred compounds for controlling catalytic activity are compounds containing vanadium, gold, silver and iron and combinations thereof.

The present catalyst composition employs a thermally stable ceria which effectively oxidizes the VOF (volatile organic fraction) of the diesel exhaust. The ceria component also serves to protect the platinum group metal from contact with the VOF to minimize the conversion of SO₂ to SO₃ as well as to decrease coke formation.

In another aspect of the invention the catalyst composition employs a non-catalytic pore-containing zeolite which absorbs VOF at low temperatures and releases the same at higher temperatures, but generally below the temperature at which SO₂ converts to SO₃. A particularly preferred zeolite is a hydrogen-beta zeolite.

The catalyst composition may be applied as a single washcoat or as multiple coats (e.g. two coats), preferably with the thermally stable ceria as a top coat and the remaining components within a bottom coat. In this embodiment of the invention the ceria based top coat has initial contact with the diesel exhaust stream to thereby absorb the VOF as well as to protect the platinum group metal.

### Detailed Description of the Invention

As used herein and in the claims, the following terms shall have the indicated meanings.

The term "washcoat" refers to a thin, adherent coating of a material, such as the catalytic material of the present invention, disposed on the walls forming the parallel gas flow passages of a carrier, which is typically made of a refractory material such as cordierite or other oxide or oxide mixture, or a stainless steel.

The term "thermally stable ceria" means ceria that does not alter its physical structure at typical diesel exhaust gas temperatures of up to about 700°C.

The term "bulk form" for ceria means that the ceria is present as discrete particles (which may be, and usually are, of very small size, e.g., 10 to 20 microns (µm) in diameter or even smaller) as opposed to having been dispersed in solution form into another component.

Catalysts applied to diesel applications must deal with many factors not associated with gasoline engines. Since the exhaust gas from diesel engines, especially those equipped with turbochargers, is cool at 150 - 200°C, it is imperative that the catalyst maintains activity at very low temperatures. Fresh platinum metal catalysts oxidize CO and HC around 200°C in the presence of SO₂. Until the temperature of the diesel exhaust stream reaches about 200°C, CO and HC are emitted into the atmosphere.

As previously described, diesel engine exhaust is comprised of not only CO and unburnt HC but also a soot phase which includes a volatile organic fraction (VOF) including unburnt fuel and lubrication oil. The VOF, unless treated in advance, can inactivate the platinum metal catalyst until temperatures are reached sufficient to oxidize these materials.

On the other hand, as temperatures of the exhaust stream rise, the SO₂ tends to oxidize to form S₃O which negatively impacts total particulate matter (TPM) emissions. In particular, at temperatures above 300°C, the rate at which platinum oxidizes SO₂ to S₃O increases dramatically. Thus, in the operation of diesel engines deactivation of the catalyst can occur at lower temperatures while unwanted production of SO₃ can occur at higher temperatures. The catalyst composition of the present invention addresses this problem by a) employing high loading amounts of the platinum group metal catalyst, b) controlling the activity of the platinum group metal, c) avoiding deactivation of the platinum group metal, d) storing HC's at lower temperatures in a non-catalytic environment, and e) minimizing the production of SO₃ when the exhaust stream reaches catalytically active temperatures.

The catalyst composition of the present invention employs three principal components, a platinum group metal component on a support including a catalytic activity controlling compound, a thermally stable ceria and an adsorbent, non-catalytic zeolite. The platinum group metal component as employed in the present invention is principally responsible for oxidizing gaseous HC and CO into innocuous materials such as water vapor and carbon dioxide without significantly catalyzing the conversion of SO₂ to S₃O . The thermally stable ceria functions to oxidize liquid phase HC (VOF) while the zeolite component adsorbs gaseous HC at low, non-catalytic temperatures and then desorbs gaseous HC at temperatures generally below the temperature at which a significant amount of SO₂ converts to SO₃. As a result, the platinum group metal converts HC to innocuous materials without converting a significant portion of adsorbed SO₂ to SO₃.

The platinum group metal component of the present invention includes any and all platinum group metals alone or in combination including oxides thereof. The platinum group metals include, for example, platinum, palladium, ruthenium, rhodium, iridium and mixtures and combinations of the same and their oxides. Platinum is the most preferred of the platinum group metals.

The amount of platinum group metal employed in the present catalyst composition should be a high loading quantity to maximize the conversion of CO and HC at the low initial temperatures of diesel fuel operation. The amount of the platinum group metal is generally at least about 5 g/ft³ (0.18 g/dm³), typically in the range of from about 5 to 100 g/ft³ (0.18 to 3.53 g/dm³), most preferably from about 10 to 70 g/ft³ (0.35 to 2.47 g/dm³). The catalyst composition of the present invention therefore differs from low loading compositions in which the platinum group metal is used in much lower quantities, typically no more than about 2.0 g/ft³ (0.071 g/dm³).

The support for the platinum group metal can be any support which does not tend to deactivate the platinum group metal during diesel exhaust treatment. Such supports include, zirconia, titania, silica and combinations thereof, preferably having a relatively low surface area. The preferred support is alumina, especially alumina having a relatively low surface area. The reduced surface area of the support serves to control the catalytic activity of the platinum group metal. While the surface area of the support may vary from about 50 to 200 m²/g, the preferred surface area is in the range of from about 90 to 110 m²/g.

The platinum group metal component can be prepared, for example, in the manner taught in Saul G. Hinden, U.S. Patent No. 4,134,860, incorporated herein by reference. A finely-divided, support (e.g. alumina) is contacted with a solution of a water-soluble, platinum group metal (e.g. platinum) to provide a composite which is essentially devoid of free or unabsorbed liquid. The platinum is converted into water-insoluble form while the composite remains essentially free of unabsorbed liquid. The composite is comminuted as a slurry to provide solid particles typically in the range of up to about 15 microns. The composite is then dried and calcined.

The catalytic component of the present invention is provided with an effective amount of at least one catalytic activity controlling material. This material serves to control (e.g. reduce) the catalytic activity of the platinum group metal so that high loadings of the platinum group metal can be employed for low temperature operations without a corresponding high conversion rate of adsorbed SO₂ to SO₃.

While any material which can control the catalytic activity of the platinum group metal may be used, the preferred materials include compounds containing gold, vanadium, silver and iron and combinations thereof, such as oxides of gold, vanadium, silver and iron. The starting materials for forming the catalytic activity controlling compounds are generally non-chloride, water-soluble compounds such as NaAuSO₃, NH₃VO₃, V₂O₅, AgNO₃ and Fe(NO₃)₃ · 9H₂O, and the like. The amount of the catalytic activity controlling material is typically in the range of from about 1 to 200 q/ft³ (0.035 to 7.06 g/dm³), preferably from about 2 to 50 g/ft³ (0.071 to 1.77 g/dm³).

Thermally stable ceria is employed in the present catalyst composition to adsorb SO₂ at low temperatures and desorb the SO₂ below the temperature at which the platinum group metal vigorously catalyzes the conversion of adsorbed SO₂ to SO₃. The ceria component also converts the VOF to innocuous materials. In particular, the ceria component must adsorb SO₂ under initial engine start up conditions and desorb SO₂ at temperatures below about 300°C. In this way the SO₂ passes through the catalyst system under conditions which do not favor conversion to SO₃. The amount of the ceria component of the catalyst is typically from about 10 to 60% by weight, preferably from about 20 to 50% by weight, and most preferably from about 20 to 40% by weight, based on the total weight of the catalyst composition.

Ceria in bulk form is the preferred thermally stable ceria material for use in the catalyst composition. Bulk ceria is solid, fine particulate ceria typically having a particle size distribution such that at least 95% by weight of the particles have a diameter exceeding 0.5 microns. Further details regarding the structure and function of bulk ceria can be found in Chung-Zong Wan et al., U.S. Patent No. 4,714,694 incorporated herein by reference. It will be understood that the ceria component employed in the present catalyst should be thermally stable at temperatures of the diesel exhaust stream, typically up to 700°C.

The zeolite component of the catalyst composition adsorbs and retains gaseous HC at below catalytic temperatures. The zeolite does not itself catalyze any of the components of the diesel exhaust stream. Accordingly, the zeolite is non-catalytic and is not doped with catalytic materials such as platinum, iron and the like. The structure of the zeolite includes pores or cages which are capable of adsorbing and then desorbing HC. Desorption of the HC occurs when the diesel exhaust is at a high enough temperature to impart sufficient energy to the adsorbed HC molecules to enable them to escape the zeolite pores. Examples of the zeolite material meeting the criteria of the present invention include, for example, hydrogen-beta zeolite, Y-zeolite, pentasil, mordenite and mixtures thereof. Hydrogen-beta zeolite is the preferred zeolite. β-zeolites which may be employed in the present invention are described in Beck, Zeolite Molecular Sieves, Structure, Chemistry and Use, John Wiley and Sons (1974); Bonetto et al., Optimization of Zeolite-Beta in Cracking Catalysts, Influence and Crystallite Size, Applied Catalysis, pp. 37-51 (1992); and U.S. Reissue Patent 28,341 of U.S. Patent No. 3,308,069; and Newsam et al., Structural Characterization of Zeolite Beta, Proc. R. Soc. Lond. A 420.375-405 (1988), each of which is incorporated herewith by reference.

The silica to alumina ratio for β-zeolite is from about 10 to about 200. β-zeolites are 12-member ring tridirectional zeolites with two types of channels, one being about 7.0 angstroms (0.7 nm) and the other about 5.5 angstroms (0.55 nm). They are known to have larger pore sizes, high silica to alumina synthesis ratio and a tridirectional network of pores making them particularly suited for adsorbing HC.

The range of the amounts of the zeolite component is similar to that of ceria. Typically the zeolite component is present in an amount from about 10 to 60% by weight, preferably 20 to 50% by weight, most preferably 20 to 40 by weight, based on the total weight of the catalyst composition.

The carrier or substrate used in this invention should be relatively inert with respect to the catalytic composition dispersed thereon. The preferred carriers are comprised of ceramic-like materials such as cordierite, α-alumina, silicon nitride, zirconia, mullite, spodumene, alumina-silica-magnesia, zirconium silicate, and refractory metals such as stainless steel. The carriers are preferably of the type sometimes referred to as honeycomb or monolithic carriers, comprising a unitary body, usually cylindrical in configuration, having a plurality of fine, substantially parallel gas flow passages extending therethrough and connecting both end-faces of the carrier to provide a "flow-through" type of carrier. Such monolithic carriers may contain up to about 700 or more flow channels ("cells") per square inch of cross section, although far fewer may be used. For example, the carrier may have from about 7 to 600, more usually from about 200 to 400, cells per square inch ("cpsi") (108.5 to 9300, more usually 3100 to 6200 cells/dm²).

Wall-flow carriers (filters) may also be used. Wall-flow carriers are generally similar in structure to flow-through carriers, with the distinction that each channel is blocked at one end of the carrier body, with alternate channels blocked at opposite end-faces. Wall-flow carrier substrates and the support coatings deposited thereon are necessarily porous, as the exhaust must pass through the walls of the carrier in order to exit the carrier structure.

The catalyst composition is deposited on the carrier such as a monolithic ceramic material in any conventional manner. A preferred method is to impregnate the carrier with an aqueous slurry of fine particles of the catalyst composition. This can be accomplished by dipping the carrier (e.g. wall flow article) into the slurry, removing excess slurry by draining and subsequent drying at from about 100 to 150°C, followed by calcining at from about 450 to 600°C.

The catalyst composition may also be applied to the carrier in multiple coats, typically as two coats. The composition of the respective coats will depend, in part, on the type of diesel exhaust being treated. For example, the support can be applied as a bottom coat and the platinum group metal, the catalytic activity controlling compound, the ceria and zeolite components as a top coat. The application of a dual coat may be conducted by first applying a slurry of the support onto the carrier followed by drying and calcining. The second coat is thereafter applied by first forming a slurry of the components of the second coat and applying the second coat in the same manner as the first coat.

In an embodiment of the invention particularly suited for diesel exhausts having a high VOF content, the bottom coat of the dual coat application contains the platinum group metal, the catalytic activity controlling compound, the support and the zeolite while the top coat contains the thermally stable ceria. By employing ceria as the top coat, there is a more effective oxidation of VOF and better protection of the platinum group metal from the deactivating effects of contact with VOF.

In another embodiment of the catalyst composition of the present invention which is particularly effective when the diesel exhaust has a dry soot content, the bottom coat includes the ceria and zeolite components while the top coat contains the platinum group metal, catalytic activity controlling compound and the support. In other embodiments of the invention, at least one of the ceria and zeolite components are provided in each of the coats of the catalyst composition.

### EXAMPLE 1

A catalyst composition according to the present invention was formed by preparing a first material starting with an ammoniacal solution containing 80% by weight of the total platinum metal employed in the catalyst composition and combining the same with 396 g of alumina having a surface area of about 90 m²/g. The platinum and alumina were pre-mixed followed by the addition of acetic acid in an amount of 4% by weight based on the weight of the alumina. After mixing, a solution of ferric nitrate [Fe(NO₃)₃ · 9H₂O], providing a Pt/Fe weight ratio of 10 was added and the combined solution mixed and ball milled in the presence of added water to give a mixture having a 46% solids content.

A second material was prepared by starting with an ammoniacal solution containing 20% by weight of the total platinum metal employed in the catalyst composition. The platinum solution was combined with bulk ceria in an amount of 396 g and premixed to form the second material.

The first and second materials as well as 396 g of H-beta zeolite were blended in the presence of water to provide a washcoat slurry having a 49% solids content. The slurry was milled to a mean particle size of less than 8µ. The resulting slurry, having a solids content of 48 - 49%, a pH of 3.5 to 3.8 and a viscosity of 20 to 30 cps (20 to 30 mPa.s), was coated on a monolithic cordierite substrate (400 cells/in²) (6200 cells/dm²) in an amount sufficient to provide a washcoat gain of 1.95 g/in³ (119 g/dm³) and then dried at 100 to 150°C and calcined at about 450°C. The final catalyst composition contained 20 g/ft³ (0.71 g/dm³) of platinum and 0.8 g/ft³ (0.028 g/dm³) of iron.

### EXAMPLE 2

A slurry containing 600 g of alumina having a surface area of 150 m²/g, 200 g of bulk ceria and 200 g of H-beta zeolite were blended together to give a mixture having a solids content of 36%. The mixture was milled so that 90% of the particles were less than 8µ. The slurry was coated on a monolithic cordierite substrate (400 cells/in²) at a washcoat gain of 1.0 g/in³ (61 g/dm³), dried at about 100°C and calcined at 450°C to form a bottom catalyst layer.

A slurry containing platinum metal and vanadium oxide from an ammoniacal solution was combined with 50 m²/g titania with the subsequent addition of 15 ml of acetic acid and then milled. The resulting slurry was combined with 300 g of bulk ceria, 400 g of H-beta zeolite and 100 g of SiO₂ from SiO₂ sol solution and blended together to form a slurry with 90% of the particles having a particle size of less than 8µ. The slurry was coated onto the above-formed bottom catalyst layer to form a top catalyst layer having a washcoat gain of 1.5 g/in³ (91.5 g/dm³). The coated substrate was dried at 105°C and calcined at 450°C to provide a catalyst containing 40 g/ft³ (1.41 g/dm³) of platinum and 30 g/ft³ (1.06 g/dm³) of vanadium.

### EXAMPLE 3

A bottom catalyst layer having the same composition as described in Example 2 was applied to a monolithic substrate made of cordierite.

A top catalyst layer slurry was prepared. 427 g of a 25% by weight ZrO₂/SiO₂ composite (210 m²/g) material was placed in a vessel. An ammoniacal solution of platinum as employed in Example 1 (14.12 g of platinum) and 0.70 g of gold from a NaAuSO₃ solution were placed in a vessel and diluted to 450 ml with deionized water. The combined platinum-gold solution was added to the ZrO₂/SiO₂ composite material and mixed to obtain a uniform mixture.

15 ml of acetic acid was slowly added to the uniform mixture followed by 20 ml of formic acid under continuous mixing. The mixed solution was transferred to a ball mill to which was added 183 g of thermally stable ceria, 244 g of H-beta zeolite, 203 g of SiO₂ sol solution (30% SiO₂) and 925 g of deionized water. The solution was milled until 90% of the particles had a particle size of less than 8µ.

The slurry was coated on the bottom catalyst layer at a washcoat gain of 1.5 g/in³ (91.5 g/dm³). The substrate was dried at 100°C and calcined at 450°C. The resulting catalyst contained 40 g/ft³ (1.41 g/dm³) of platinum and 2 g/ft³ (0.071 g/dm³) of gold.

### EXAMPLE 4

A slurry containing 700 g of alumina having a surface area of 90 m²/g and 300 g of bulk ceria were blended with water to give a mixture having a solids content of 38%. The mixture was milled until 90% of the particles had a particle size of less than 8µ and then coated on a monolithic cordierite substrate (400 cells/in²) (6200 cells/dm²) at a washcoat gain of 1.0 g/in³ (61 g/dm³), dried at 105°C and calcined at 450°C to form a bottom catalyst layer.

A mixture of an ammoniacal solution of platinum, a solution of Pd(NH₃)₄(NO₃)₂ and a solution of NaAuSO₃ were combined with 500 g of a ZrO₂/SiO₂ composite and mixed followed by the addition of acetic acid and formic acid.

The resulting slurry was combined with 300 g of bulk ceria, 600 g of H-beta zeolite, 50 g of Pr₂O₃ and a sufficient amount of water to give a slurry with a 37% solids content. The slurry was milled until 90% of the particles had a particle size of less than 8 microns. The slurry was applied to the bottom catalyst layer at a washcoat gain of 1.45 g/in³ (88.5 g/dm³), dried at about 105°C and calcined at about 500°C. The resulting catalyst contained 40 g/ft³ (1.41 g/dm³) of platinum, 1 g/ft³ (0.035 g/dm³) of palladium and 2 g/ft³ of gold (0.071 g/dm³).

### EXAMPLE 5

The same bottom catalyst layer described in Example 4 was formed on a monolithic substrate. A top catalyst layer was formed as described in Example 4 except that the amount of gold was increased to 5 g/ft³ (0.177 g/dm³).

### EXAMPLE 6

500 g of a 12% TiO₂-Al₂O₃ composite material was mixed with an ammoniacal solution (diluted to 400 ml with deionized water) containing 14.47 g of platinum. To this mixture was added 15 ml of acetic acid under mixing.

A solution of AgNO₃ containing 1.8 g of Ag was diluted to 25 ml with deionized water. The diluted silver solution was added to the Pt-TiO₂-Al₂O₃ produced above and mixed.

The mixture was combined with 250 g of H-beta zeolite and 475 g of deionized water. The resulting slurry was milled until 90% of the particles had a particle size of less than 8µ.

A cordierite honeycomb substrate (400 cells/in²) (6200 cells/dm²) was coated with the slurry at a washcoat gain of 1.2 g/in³ (73.2 g/dm³). The coated substrate was dried at 100°C and calcined at 450°C to form a bottom catalyst layer.

A top catalyst layer, prepared in the following manner, was coated on the bottom catalyst layer.

600 g of gamma-alumina, 400 g of bulk ceria, and 1500 ml of deionized water were combined and milled until 90% of the particles had a particle size of less than 8µ. The slurry was then coated on the bottom catalyst layer at a washcoat gain of 1.0 g/in³ (61 g/dm³). The top coating layer was then dried at 100°C and calcined at 450°C. The resulting catalyst contained 40 g/ft³ (1.41 g/dm³) of platinum and 5 g/ft of silver (0.177 g/dm³).

### EXAMPLE 7

438 g of a 25% ZrO₂-SiO₂ composite material was mixed with an ammoniacal solution (diluted to 350 ml with deionized water) containing 14.47 g of platinum. To this mixture was added 15 ml acetic acid under mixing.

A solution of NaAuSO₃ containing 1.81 g Au was diluted to 25 ml with deionized water. The diluted gold solution was added to the Pt-ZrO₂-SiO₂ produced above and mixed.

The mixture was combined with 250 g of H-beta zeolite, 250 g of bulk ceria, 310 g of a 30% solution of SiO₂ and 500 g of deionized water. The resulting slurry was milled until 90% of the particles had a particle size of less than 8µ.

A cordierite honeycomb substrate (400 cells/in²) (6200 cells/dm²) was coated with the slurry at a washcoat gain of 1.6 g/in³ (97.6 g/dm³). The coated substrate was dried at 100°C and calcined at 450°C to form a bottom catalyst layer.

A top catalyst layer prepared in the following manner was coated on the bottom catalyst layer.

400 g of a 2% SiO₂ doped titania, 400 g of bulk ceria, 100 g of H-beta zeolite, 500 g of a 30% solution of SiO₂ and 1100 ml of deionized water were combined and milled until 90% of the particles had a particle size of less than 8µ. The slurry was then coated on the bottom catalyst layer at a washcoat gain of 1.0 g/in³ (61 g/dm³). The top catalyst layer was then dried at 100°C and calcined at 450°C. The resulting catalyst contained 40 g/ft³ (1.41 g/dm³) of platinum and 5 g/ft³ (0.177 g/dm³) of gold.

### REFERENCE EXAMPLE 1

A reference catalyst composition (Ref. Ex. 1) was prepared in the following manner.

396 g of gamma-alumina was placed in a vessel and mixed. An ammoniacal solution of platinum as employed in Example 1 (6.336 g of platinum) was placed in a separate vessel and diluted to 270 ml with deionized water. The platinum solution was slowly added to the alumina and mixed followed by the addition of 15 ml of concentrated acetic acid and further mixing. The resulting solution and 450 g of deionized water were placed in a ball mill and milled until 90% of the particles had a particle size of less than 8µ.

A slurry containing platinum/ceria and H-beta zeolite was prepared in the following manner.

396 g of ceria-zirconia composite material was placed in a vessel and mixed. An ammoniacal solution of platinum as used in Example 1 (0.704 g of platinum) was placed in a separate vessel and diluted to 120 ml with deionized water. The platinum solution was added to the solution of ceria-zirconia and mixed until uniform. 12 ml of concentrated acetic acid was added to the uniform solution followed by mixing. The resulting solution as well as 396 g of H-beta zeolite and 650 g of deionized water were placed in a ball mill and milled until 90% of the particles had a particle size of less than 8µ.

The two slurries were combined and blended and coated on a cordierite honeycomb substrate (400 cells/in²) (6200 cells/dm²) at a washcoat gain of 1.95 g/in³ (119 g/dm³). The substrate was dried at 100°C and calcined at 450°C. The resulting catalyst contained 20 g/ft³ (0.71 g/dm³) of platinum.

Reference Example 1 and the catalyst composition prepared in accordance with Example 1 were used to treat a diesel exhaust stream containing C₇H₁₆, C₃H₈, CO, SO₂ and H₂O under the following conditions.

A reactor synthetic gas having the following composition
200 ppm HC as propylene and propane in
a 2:1 ratio
200 ppm CO
1000 ppm NO
50 ppm SO₂
10% by volume H₂O (steam)
4.5% by volume CO₂
10% by volume O₂
balance N₂
was provided at a space velocity of 50,000 (volume hour, 1/hr) at an aging temperature of 500°C for 2 hours in reactor gases. The size of the catalyst was 87 cm³ with 62 cells/cm² (961 cells/dm²).

Each of the catalyst compositions were tested over a range of operating temperatures of from 250°C to 400°C in increments of 50°C. The % conversion of HC, CO and SO₂ were measured by individual analyzers and the results shown in Table 1.

**TABLE 1**

| Temperature | Ref. Example 1 % Conversion | | | | Example 1 % Conversion | | |
|---|---|---|---|---|---|---|---|
| | HC | CO | SO₂ | | HC | CO | SO₂ |
| 250°C | 62 | 98 | 27 | | 59 | 96 | 26 |
| 300°C | 67 | 98 | 31 | | 63 | 98 | 26 |
| 350°C | 78 | 98 | 60 | | 70 | 98 | 48 |
| 400°C | 81 | 98 | 72 | | 75 | 98 | 66 |

As shown in Table 1 the % conversion of SO₂ to SO₃ was significantly lower for the catalyst of Example 1 as compared with Reference Example 1, particularly at temperatures of 300°C or more. This shows that the catalytic activity of the platinum metal is effectively controlled in the present invention to limit the undesirable formation of sulfates. The present catalyst also provides sufficient conversion rates of HC and CO comparable to that of the reference catalyst.

### REFERENCE EXAMPLE 2

A reference catalyst composition (Ref. Ex. 2) was prepared in the following manner.

420 g of gamma-alumina was placed in a vessel and mixed. An ammoniacal solution of platinum as employed in Example 1 (5.79 g of platinum) was placed in a separate vessel and diluted to 300 ml with deionized water. The platinum solution was slowly added to the alumina and mixed followed by the addition of 12 ml of concentration acetic acid and further mixing. The resulting solution and 300 g of deionized water were placed in a ball mill and milled until 90% of the particles had a particle size of less than 8µ.

A slurry containing platinum/ceria and Fe-beta zeolite was prepared in the following manner.

415 g of alumina doped ceria was placed in a vessel and mixed. An ammoniacal solution of platinum as used in Example 1 (5.79 g of platinum) was placed in a separate vessel and diluted to 125 ml with deionized water. The platinum solution was added to the solution of alumina doped ceria and mixed until uniform. 12 ml of concentrated acetic acid was added to the uniform solution followed by mixing. The resulting solution as well as 415 g of Fe-beta zeolite and 700 g of deionized water were placed in a ball mill and milled until 90% of the particles had a particle size of less than 8µ.

The two slurries were combined and blended and coated on a cordierite honeycomb substrate at a washcoat gain of 2.50 g/in³ (152.6 g/dm³). The substrate was dried at 100°C and calcined at 450°C. The resulting catalyst contained 40 g/ft³ (1.41 g/dm³) of platinum.

Reference Example 2 and each of Examples 2 - 4 were used to treat a diesel exhaust stream containing C₇H₁₆, CO, SO₂ and H₂O under the same reactor conditions described previously for the comparison of Reference Example 1 and Example 1. Each of the catalyst compositions were tested over a range of operating temperatures in 50°C increments of from 200°C to 400°C. The % conversion at 50°C increments of HC, CO and SO₂ were measured and the results shown in Table 2.

**TABLE 2**

| Temp | Reference Example 2 % Conversion | | | Example 2 % Conversion | | | Example 3 % Conversion | | | Example 4 % Conversion | | |
|---|---|---|---|---|---|---|---|---|---|---|---|---|
| °C | HC | CO | SO₂ | HC | CO | SO₂ | HC | CO | SO₂ | HC | CO | SO₂ |
| 200 | 4 | 98 | 33 | 4 | 94 | 12 | 2 | 98 | 28 | 3 | 97 | 6 |
| 250 | 46 | 98 | 55 | 23 | 97 | 16 | 28 | 98 | 28 | 27 | 97 | 16 |
| 300 | 92 | 98 | 55 | 82 | 97 | 20 | 87 | 98 | 41 | 87 | 98 | 46 |
| 350 | 96 | 99 | 68 | 96 | 98 | 29 | 96 | 98 | 50 | 94 | 98 | 66 |
| 400 | 97 | 99 | 76 | 97 | 98 | 49 | 97 | 98 | 63 | 95 | 98 | 76 |

As shown in Table 2, the % conversion of SO₂ to SO₃ for the present catalyst composition is significantly less than the reference catalyst especially at low operating temperatures.

Reference Example 1 and each of Examples 5 and 6 were used to treat the same diesel exhaust stream under the same reactor conditions as previously described above for Examples 2 - 4. Each of the catalyst compositions were measured for HC, CO and SO₂ conversion rates in the same manner as described above and the results are shown in Table 3.

**TABLE 3**

| Temp. °C | Reference Example 2 % Conversion | | | | Example 5 % Conversion | | | | Example 6 % Conversion | | |
|---|---|---|---|---|---|---|---|---|---|---|---|
| | HC | CO | SO₂ | | HC | CO | SO₂ | | HC | CO | SO₂ |
| 200 | 4 | 98 | 33 | | 2 | 91 | 12 | | 1 | 83 | 6 |
| 250 | 46 | 98 | 55 | | 19 | 97 | 15 | | 3 | 91 | 8 |
| 300 | 92 | 98 | 55 | | 73 | 97 | 33 | | 31 | 97 | 8 |
| 350 | 96 | 99 | 68 | | 91 | 97 | 53 | | 85 | 98 | 11 |
| 400 | 97 | 99 | 76 | | 93 | 97 | 67 | | 93 | 98 | 27 |

As shown in Table 3, the % conversion of SO₂ to SO₃ for the present catalyst composition is significantly less than the reference catalyst.

Reference catalyst 2 and the catalyst of Example 7 were subjected to a diesel engine light-off activity test in the following manner.

A cordierite honeycomb substrate having a volume of 55 in³ (901.3cm³), and 400 cells/in² (6200 cells/dm²), was loaded with the respective catalysts having a platinum loading of 40 g/ft³ (1.41 g/dm³). The catalyst structures were contacted with a diesel exhaust stream from a diesel engine operating at a speed effective to provide 2000 l/min of exhaust, an engine load of 15 - 180 NM and a catalyst inlet temperature ranging from 100 to 530°C. The engine aging cycle was 130°C for 15 minutes followed by 650°C for 15 minutes.

The percentage conversion of HC, CO and total particulate matter (TPM) was measured and the results are shown in Table 4.

**TABLE 4**

| Temp. °C | % HC Conv. | | % CO Conv. | | % TPM Conv. | |
|---|---|---|---|---|---|---|
| | Ref. 2 | Ex. 7 | Ref. 2 | Ex. 7 | Ref. 2 | Ex. 7 |
| 150 | 58 | 48 | 7 | 5 | 45 | 55 |
| 200 | 41 | 92 | 11 | 5 | 66 | 71 |
| 250 | 57 | 70 | 86 | 78 | 50 | 55 |
| 300 | 79 | 82 | 86 | 95 | 40 | 59 |
| 350 | 78 | 76 | 72 | 94 | 11 | 19 |
| 400 | 71 | 65 | 76 | 91 | 5 | 16 |
| 450 | 72 | 60 | 75 | 92 | -10 | 18 |
| 500 | 80 | 57 | 74 | 93 | -30 | 25 |

As shown in Table 4, the conversion of TPM for the present catalyst composition was significantly greater than for the reference catalyst, especially at high operating temperatures while the present catalyst exhibited sufficient conversion rates of HC and CO although somewhat less than the reference catalyst.

## Claims

1. A catalyst composition for treating a diesel engine exhaust stream comprising hydrocarbons, the composition comprising:
a) at least one platinum group metal on a support in the presence of at least one catalyst activity controlling compound selected from the group consisting of gold, vanadium, silver and iron compounds;
b) a thermally stable ceria; and
c) a zeolite to adsorb and desorb hydrocarbons and which is not doped with a catalytic material.

2. The catalyst composition of claim 1 wherein the zeolite is selected from the group consisting of hydrogen-beta zeolite, Y zeolite, pentasil, mordenite and mixtures thereof.

3. The catalyst composition of claim 1 wherein the amount of the catalyst activity controlling compound is from about 1 to 200 g/ft³ (0.0353 to 7.063 g/dm³).

4. The catalyst composition of claim 1 wherein the amount of the catalyst activity controlling compounds is from about 2 to 50 g/ft³ (0.071 to 1.77 g/dm³).

5. The catalyst composition of claim 1 wherein the amount of the platinum group metal is at least about 5 g/ft³ (0.177 g/dm³).

6. The catalyst composition of claim 1 wherein the amount of the platinum group metal is from about 5 to 100 g/ft³ (0.177 to 3.53 g/dm³).

7. The catalyst composition of claim 1 wherein the amount of the platinum group metal is from about 10 to 70 g/ft³ (0.353 to 2.47 g/dm³).

8. The catalyst composition of claim 1 wherein the support for the platinum group metal is selected from the group consisting of alumina, zirconia, titania, silica and combinations thereof.

9. The catalyst composition of claim 1 wherein the support for the platinum group metal is alumina.

10. The catalyst composition of claim 1 wherein the support comprises alumina.

11. The catalyst composition of claim 1 wherein the surface area of the support is from about 50 to 200 m²/g.

12. The catalyst composition of claim 10 wherein the surface area of the support is from about 90 to 110 m²/g.

13. The catalyst composition of claim 1 wherein the thermally stable ceria comprises bulk form ceria composed of fine particles wherein 95% by weight of the particles has a diameter exceeding 0.5µ.

14. The catalyst composition of claim 1 wherein the amount of the thermally stable ceria is from about 10 to 60% by weight based on the total weight of the catalyst composition.

15. The catalyst composition of claim 1 wherein the ceria is in the form of bulk ceria.

16. The catalyst composition of claim 1 wherein the zeolite is hydrogen-beta zeolite.

17. The catalyst composition of claim 1 wherein the amount of the zeolite is from about 10 to 60% by weight based on the total weight of the catalyst composition.

18. The catalyst composition of claim 1 wherein the platinum group metal is platinum.

19. A catalyst structure comprising:
a) a catalyst substrate; and
b) the catalyst composition of claim 1 on said substrate.

20. The catalyst structure of claim 19 wherein the substrate is in the form of a flow-through carrier.

21. The catalyst structure of claim 19 wherein the substrate is in the form of a wall-flow carrier.

22. The catalyst structure of claim 19 wherein the catalyst composition is in the form of at least one washcoat.

23. The catalyst structure of claim 19 wherein the catalyst composition is in the form of two washcoats, a bottom washcoat comprising the support and a top washcoat comprising the platinum group metal, the catalytic activity controlling compound, the thermally stable ceria and the non-catalytic pore-containing zeolite.

24. The catalyst structure of claim 19 wherein the catalyst composition is in the form of two washcoats, a bottom washcoat comprising the platinum group metal, the catalytic activity controlling compound, the support and the non-catalytic pore-containing zeolite and a top washcoat comprising the thermally stable ceria.

25. The catalyst structure of claim 19 wherein the catalyst composition is in the form of two washcoats, a bottom washcoat comprising the thermally stable ceria and the non-catalytic pore-containing zeolite and a top washcoat comprising the platinum group metal, the catalytic activity controlling compound and the support.

26. The catalyst structure of claim 19 wherein the catalyst composition is in the form of two washcoats, each coat containing at least one of said thermally stable ceria and said zeolite.

27. A method of treating a diesel exhaust stream comprising passing said diesel exhaust stream into operative contact with the catalyst composition of claim 1.

28. A method of treating a diesel exhaust stream comprising passing said diesel exhaust stream into operative contact with the catalyst structure of claim 19.

## Patentansprüche

1. Katalysatorzusammensetzung zur Behandlung des Abgasstroms eines Dieselmotors umfassend Kohlenwasserstoffe, wobei die Zusammensetzung umfasst:
a) wenigstens ein Platinmetall auf einem Träger in Anwesenheit wenigstens einer die Katalysatoraktivität steuernden Verbindung, gewählt aus der Gruppe bestehend aus Gold-, Vanadium-, Silber- und Eisenverbindungen;
b) ein thermisch stabiles Cerdioxid;
c) ein Zeolith um Kohlenwasserstoffe zu adsorbieren und desorbieren und welches nicht mit einem katalytischen Material dotiert ist.

2. Katalysatorzusammensetzung nach Anspruch 1, wobei der Zeolith aus der Gruppe gewählt ist, bestehend aus Wasserstoff- Beta-Zeolith, Y-Zeolith, Pentasil, Mordenit und deren Mischungen.

3. Katalysatorzusammensetzung nach Anspruch 1, wobei die Menge der die Katalysatoraktivität steuernden Verbindung zwischen 1 bis 200 g/ft³ (0,0353 bis 7,063 g/dm³) beträgt.

4. Katalysatorzusammensetzung nach Anspruch 1, wobei die Menge der die Katalysatoraktivität steuernden Verbindung zwischen 2 bis 50 g/ft³ (0,071 bis 1,77 g/dm³) beträgt.

5. Katalysatorzusammensetzung nach Anspruch 1, wobei die Menge des Platinmetalls wenigstens ungefähr 5 g/ft³ (0,177 g/dm³) beträgt.

6. Katalysatorzusammensetzung nach Anspruch 1, wobei die Menge des Platinmetalls von ungefähr 5 bis 100 g/ft³ (0,177 bis 3,53 g/dm³) beträgt.

7. Katalysatorzusammensetzung nach Anspruch 1, wobei die Menge des Platinmetalls von ungefähr 10 bis 70 g/ ft³ (0,353 to 2,47 / dm³) beträgt.

8. Katalysatorzusammensetzung nach Anspruch 1, wobei der Träger für das Platinmetall aus der Gruppe gewählt ist, bestehend aus Aluminiumoxid, Zirkoniumdioxid, Titanerde, Siliziumdioxid und deren Kombinationen.

9. Katalysatorzusammensetzung nach Anspruch 1, wobei der Träger des Platinmetalls Aluminiumoxid ist.

10. Katalysatorzusammensetzung nach Anspruch 1, wobei der Träger Aluminiumoxid umfasst.

11. Katalysatorzusammensetzung nach Anspruch 1, wobei die Mantelfläche des Trägers von ungefähr 50 bis 200 m²/g beträgt.

12. Katalysatorzusammensetzung nach Anspruch 1, wobei die Mantelfläche des Trägers von ungefähr 90 bis 110 m²/g beträgt.

13. Katalysatorzusammensetzung nach Anspruch 1, wobei das thermisch stabile Cerdioxid Cerdioxid in der Form von Schüttgut (bulk form ceria) umfasst, bestehend aus feinen Teilchen, wobei 95 Gew.-% der Teilchen einen Durchmesser aufweisen, der 0,5 µm überschreitet.

14. Katalysatorzusammensetzung nach Anspruch 1, wobei die Menge des thermisch stabilen Cerdioxid von ungefähr 10 bis 60 Gew.-% bezogen auf das Gesamtgewicht der Katalysatorzusammensetzung beträgt.

15. Katalysatorzusammensetzung nach Anspruch 1, wobei das Cerdioxid in der Form von Cerdioxidschüttgut vorliegt.

16. Katalysatorzusammensetzung nach Anspruch 1, wobei das Zeolith Wasserstoff-Beta-Zeolith ist.

17. Katalysatorzusammensetzung nach Anspruch 1, wobei die Menge des Zeoliths von 10 bis 60 Gew.-% bezogen auf das Gesamtgewicht der Katalysatorzusammensetzung beträgt.

18. Katalysatorzusammensetzung nach Anspruch 1, wobei das Platinmetall Platin ist.

19. Katalysatorstruktur bzw. -aufbau umfassend:
a) ein Katalysatorsubstrat; und
b) die Katalysatorzusammensetzung aus Anspruch 1 auf dem Substrat.

20. Katalysatorstruktur bzw. -aufbau nach Anspruch 19, wobei das Substrat in der Form eines Durchflussträgers vorliegt.

21. Katalysatorstruktur bzw. -aufbau nach Anspruch 19, wobei das Substrat in Form eines Wanddurchflussträgers (wall flow carrier) vorliegt.

22. Katalysatorstruktur bzw. -aufbau nach Anspruch 19, wobei die Katalysatorzusammensetzung in Form wenigstens eines Washcoats vorliegt.

23. Katalysatorstruktur bzw. -aufbau nach Anspruch 19, wobei die Katalysatorzusammensetzung in Form zweier Washcoats vorliegt, eines unteren Washcoats, welcher den Träger umfasst, und eines oberen Washcoats, welcher das Platinmetall umfasst, die die katalytische Aktivität steuernde Verbindung, das thermisch stabile Cerdioxid und das nichtkatalytische, Poren aufweisende Zeolith.

24. Katalysatorstruktur bzw. -aufbau nach Anspruch 19, wobei die Katalysatorzusammensetzung in Form zweier Wash-Coats vorliegt, eines Boden-Wash-Coats, umfassend das Metall der Platingruppe, die die katalytische Aktivität steuernde Verbindung, den und das nichtkatalytische Poren aufweisende Zeolith und eines oberen Wash-Coats, umfassend das thermisch stabile Cerdioxid.

25. Katalysatorstruktur nach Anspruch 19, wobei die Katalysatorzusammensetzung in Form zweier Wasch- Coats vorliegt, eines Boden-Wash-Coats, umfassend das thermisch stabile Cerdioxid und das nichtkatalytische Poren aufweisende Zeolith und eines oberen Wash-Coats, umfassend das Platinmetall, die die katalytische Aktivität steuernde Verbindung und den Träger.

26. Katalysatorstruktur nach Anspruch 19, wobei die Katalysatorzusammensetzung in Form zweier Wash-Coats vorliegt, wobei jede Beschichtung wenigstens eines des thermisch stabilen Cerdioxids und des Zeoliths enthält.

27. Verfahren zur Behandlung eines Dieselabgasstroms, umfassend das Durchführen des Dieselabgasstroms in operativem Kontakt mit der Katalysatorzusammensetzung nach Anspruch 1.

28. Verfahren zur Behandlung eines Dieselabgasstromes, umfassend das Durchführen des Dieselabgasstromes in operativen Kontakt mit der Katalysatorstruktur bzw. -aufbau nach Anspruch 19.

## Revendications

1. Une composition de catalyseur pour le traitement d'un courant d'échappement de moteur diesel comportant des hydrocarbures, la composition comportant :
a) au moins un groupe de métal du platine sur un support en présence d'au moins un composé contrôlant l'activité du catalyseur, choisi dans le groupe constitué de composés d'or, de vanadium, d'argent et de fer ;
b) une cérite thermiquement stable ; et
c) une zéolite pour adsorber et désorber des hydrocarbures et qui n'est pas dopée au moyen d'un matériau catalytique.

2. La composition de catalyseur de la revendication 1, dans laquelle la zéolite est choisie dans le groupe constituée d'une zéolite béta-hydrogénée, d'une zéolite Y, de pentasil, de mordénite et de mélanges de ceux-ci.

3. La composition de catalyseur de la revendication 1, dans laquelle la quantité de composé contrôlant l'activité du catalyseur est d'environ 1 à 200 g/pied³ (0,0353 à 7,063 g/dm³).

4. La composition de catalyseur de la revendication 1, dans laquelle la quantité de composé contrôlant l'activité du catalyseur est de 2 à 50 g/pied³ (0,071 à 1,77 g/dm³).

5. La composition de catalyseur de la revendication 1, dans laquelle la quantité de métal du groupe du platine est d'au moins environ 5 g/pied³ (0,177 g/dm³).

6. La composition de catalyseur de la revendication 1, dans laquelle la quantité de métal du groupe du platine est d'environ 5 g/pied³ à 100 g/pied³ (0,177 g. à 3,53 g/dm³).

7. La composition de catalyseur de la revendication 1, dans laquelle la quantité de métal du groupe du platine est d'environ 10 à 70 g/pied³ (0,353 à 2,47 g/dm³).

8. La composition de catalyseur de la revendication 1, dans laquelle le support pour le métal du groupe de platine est choisi dans le groupe constitué de l'alumine, de la zircone, du dioxyde de titane, de la silice et des combinaisons de ceux-ci.

9. La composition de catalyseur de la revendication 1, dans laquelle le support du métal du groupe du platine est l'alumine.

10. La composition de catalyseur de la revendication 1, dans laquelle le support comporte de l'alumine.

11. La composition de catalyseur de la revendication 1, dans laquelle la surface spécifique du support est d'environ 50 à 200 m²/g.

12. La composition de catalyseur de la revendication 10, dans laquelle la surface spécifique du support est d'environ 90 à 110 m²/g.

13. La composition de catalyseur de la revendication 1, dans laquelle la cérite thermiquement stable comporte une cérite, sous forme brute, composée de fines particules dans laquelle 95 % en poids des particules ont un diamètre supérieur à 0,5 µ.

14. La composition de catalyseur de la revendication 1, dans laquelle la quantité de cérite thermiquement stable est d'environ 10 à 60 % en poids, en se basant sur le poids total de la composition de catalyseur.

15. La composition de catalyseur de la revendication 1, dans laquelle la cérite est sous la forme de cérite brute.

16. La composition de catalyseur de la revendication 1, dans laquelle la zéolite est une zéolite béta hydrogénée.

17. La composition de catalyseur de la revendication 1, dans laquelle la quantité de zéolite est d'environ 10 à 60 % en poids en se basant sur le poids total de la composition de catalyseur.

18. La composition de catalyseur de la revendication 1, dans laquelle le métal du groupe de platine est le platine.

19. Une structure de catalyseur comportant :
a) un substrat de catalyseur ; et
b) la composition de catalyseur de la revendication 1 sur ledit substrat.

20. La structure de catalyseur de la revendication 19, dans laquelle le substrat est sous la forme d'un support à écoulement transversal.

21. La structure de catalyseur de la revendication 19, dans laquelle le substrat est sous la forme d'un support à écoulement lamellaire.

22. La structure de catalyseur de la revendication 19, dans laquelle la composition du catalyseur est sous la forme d'au moins une couche de lavage.

23. La structure de catalyseur de la revendication 19, dans laquelle la composition du catalyseur est sous la forme de deux couches de lavage, une couche inférieure de lavage comportant un support et une couche supérieure de lavage comportant le métal du groupe du platine, le composé contrôlant l'activité du catalyseur, la cérite thermiquement stable et la zéolite non catalytique renfermant des pores.

24. La structure catalytique de la revendication 19, dans laquelle la composition de catalyseur est formée de deux couches de lavage, une couche de lavage inférieure comportant du métal du groupe du platine, le composé contrôlant l'activité du catalyseur, le support et la zéolite non-catalytique renfermant des pores et une couche de lavage supérieure comprenant la cérite thermiquement stable.

25. La structure de catalyseur de la revendication 19, dans laquelle la composition de catalyseur est sous la forme de deux couches de lavage, une couche de lavage inférieure comportant la cérite thermiquement stable et la zéolite non-catalytique renfermant des pores et une couche de lavage supérieure comportant le métal du groupe du platine, le composé contrôlant l'activité catalytique et le support.

26. La structure de catalyseur de la revendication 19, dans laquelle la composition de catalyseur est sous la forme de deux couches de lavage, chaque couche comprenant au moins une parmi ladite cérite thermiquement stable et ladite zéolite.

27. Procédé pour traiter un courant d'échappement diesel, comportant le passage dudit courant d'échappement diesel en contact de fonctionnement avec la composition de catalyseur de la revendication 1.

28. Procédé pour traiter un courant d'échappement diesel comportant le passage dudit courant d'échappement diesel en contact de fonctionnement avec la structure de catalyseur de la revendication 19.
